**Europäisches Patentamt**

**European Patent Office**

**Office européen des brevets**

(11) Publication number: **0 217 472**
**B1**

# EUROPEAN PATENT SPECIFICATION

(45) Date of publication of patent specification: **05.12.90**

(21) Application number: **86201677.1**

(22) Date of filing: **29.09.86**

(51) Int. Cl.⁵: **A 01 J 7/00**

(54) **Apparatus for removing a milking cluster, particularly for a cow-shed.**

(30) Priority: **02.10.85 NL 8502694**

(43) Date of publication of application:
**08.04.87 Bulletin 87/15**

(45) Publication of the grant of the patent:
**05.12.90 Bulletin 90/49**

(84) Designated Contracting States:
**DE FR GB IT NL SE**

(56) References cited:
**EP-A-0 097 395**
**CH-A- 528 394**
**FR-A-2 356 028**

(73) Proprietor: **Kummer Electronics B.V.**
**Oostergrachtswal 91-95**
**NL-8921 AB Leeuwarden (NL)**

(72) Inventor: **Kummer, Jan**
**Oostergrachtswal 91-95**
**NL-8921 AB Leeuwarden (NL)**

(74) Representative: **den Boer, Jan Johannes, Ir.**
**et al**
**Octrooibureau Polak & Charlouis Laan Copes**
**van Cattenburch 80**
**NL-2585 GD The Hague (NL)**

Courier Press, Leamington Spa, England.

## Description

The invention relates to an apparatus for applying and removing a milking cluster to and from a cow respectively, comprising a vertically movable lifting element, to which the milking cluster is connected by means of a lifting cord, said apparatus being connected with a valve which is connected by a vacuum hose to the vacuum conduit of a milking machine and which is included in an electronic control circuit, which vale is adapted to be switched by said circuit into a position in which it brings the lifting element under the influence of the vacuum, whereby the milking cluster is lifted into a rest position above the ground, while simultaneously being released from the cow's udder.

Such an apparatus is known e.g. from the European patent application 0097395. Cow sheds are still commonly in use on small farms and for such users such apparatus are rather expensive. The synthetic resin cylinder with its piston and particularly the seals thereof, as well as a screw cap on the cylinder end, where the electronic control unit has been provided, are expensive parts.

The invention aims at furthering the transportability of the apparatus by decreasing its weight and its volume in the transported condition and at reducing the cost of the apparatus while retaining its correct operation.

This is achieved according to the invention in that the lifting element is an air tight elongated flexible hose-shaped bellows, manufactured from a resilient material and internally engaged by a rigid, e.g. metallic ring between each two successive ondulations of the bellows, said bellows being as a whole longitudinally contractable and expansible respectively as a result of air pressure prevailing therein and having the lifting cord attached at its lower end.

The piston with seals and other above mentioned parts are eliminated. The element is simple and light weight. In the removal condition, with the milking cluster suspended thereby, the element is retracted to substantially one-third of its length which it has in the condition for application and is in that retracted position substantially rigid and of small length, so that the apparatus may be more easily displaced from one cow position to another in the shed than the heavier and longer cylinder of the known apparatus. In the application condition the bellows is elongated and rather limp and flexible so that it constitutes so to speak a prolongation of the lifting cord which then, although it has been connected to the lower end of the lifting element contrary to in the known removal apparatus extends in the same way as the lifting cord of that known apparatus. For it is that with that known apparatus the cord extends from the upper end of the cylinder in order to prevent dragging of the milking cluster along the dirty ground.

The flexible bellows extending along the same curve as the lifting cord keeps the milking cluster at a greater distance from the ground than it would move during cluster removal with the cord connected to the bottom of the known rigid and vertically suspended cylinder.

The flexible bellows also has a soft feel for the cow when it contacts this element, which is important, since irritation of the cow in a milking-shed must be avoided as much as possible in order to improve the milk output of the cow. The rigid cylinder could hurt the cow.

With the known rigid lifting cylinder the movement of the piston often starts with a so-called slip-stick movement when the vacuum is admitted above this piston. This vibratory movement is transmitted to the cow's udder which hurts and irritates the cow. The flexible bellows according to the invention eliminates this disadvantage.

Preferably the rings in the bellows are constituted by the turns of a coil tension spring, continuing through the length of the bellows.

With removal apparatus of the type to which the invention relates, a three-way valve must be used as the vacuum valve, which valve communicates in its one position with the vacuum conduit and in its other position with the ambient air. However, another possibility is to use a two-way valve, which is available at about half the price of the three-way valve, which in its other position only closes the communication with the vacuum conduit but does not establish a communication with the ambient air. In that case a simple spring biassed valve should be provided on the lower end of the cylinder or in the connection between the valve and the cylinder, said valve being adapted to be opened by means of a cord, against the spring force, when it is desired to apply the milking cluster.

It is advantageous if in the removal apparatus according to the invention the vacuum valve is a two-way valve and a manually operable air supply valve is provided at the lower end of the bellows. In that the bellows is shortened in the removal condition to about one-third of its length, a person is permitted to operate the pull valve without bending down and therewith to simultaneously take along with the milking cluster the lower end of the lifting element in the direction towards the cow. This permits easier application of the cluster.

An advantageous further development is that in which the manually operable air supply valve is a resilient plug, which is retractably inserted into a central aperture in the bottom of the bellows and to which the lifting cord is connected.

Since a cow could damage the apparatus by unexpected movements or by stepping with a hind leg on the lifting cord, the cord usually is connected to the lifting element through a small spring clamp, which opens when it is overloaded. According to the development when an overload occurs, the connection is broken in that the plug is pulled from the lifting element, whereby this lifting element is not lifted when the vacuum valve is operated for removal of the milking cluster. In that case the farmer immediately observes from the length of the lifting element that something is wrong. The connection between the lifting cord and the lifting element may be easily reinstated by pressing the plug, which e.g. has a pear-shape, back into the bottom aperture.

In so-called walk-in stables, in which the cows are arranged during milking alongside a pit in the stable, it may be troublesome if due to stepping on the lifting cord, the vacuum is established and the lower end of the lifting element moves upwardly in that the hose contracts. The operator namely stands on the bottom of the pit and since the vacuum conduit is at a level of about 2 metres above the edge of the pit, he then has to climb out of the pit in order to be able to reconnect the lifting cord to the lower end of the hose.

A different advantageous method in order to prevent damage to the hose when the cow steps on the lifting cord and yet, contrary to the use of the spring clamp, restrict the force acting on the hose when the cow steps on the cord to an accurately predetermined maximum, is that in which the lifting cord is connected with the bellows by means of a soft iron plate and a permanent ·magnetic plate, one of said plates being connected to the lifting cord and the other being secured to the lower end of the bellows, or by means of two oppositely polarised permanent magnetic plates respectively, a protection cup surrounding the plate that is connected to the lifting cord.

It is in that case not necessary to manufacture the hose from unnecessarily thick material whereby the flexibility in the applied position of the milking cluster and thereby the inclination of the hose with the vertical direction would diminish (whereby the cluster could drag along the ground). The force produced by a cow is so great that even with thick hose material, the hose could be damaged.

The invention will be further illustrated below with reference to the drawing in which an embodiment of the removal apparatus according to the invention, gives as an example only, is shown.

Fig. 1 shows the removal apparatus with the milking cluster applied to a cow.

Fig. 2 shows a longitudinal section through the lifting element.

Fig. 3 shows in its left part the lifting element in extended condition and in the right part in contracted condition, together with the electronical assembly and connected to the vacuum conduit of a milking machine.

Figures 4a and 4b show partial longitudinal sections of the lifting element, provided with a magnetic stepping-on-protection, in the normally connected and stepped-on condition of the lifting-cord.

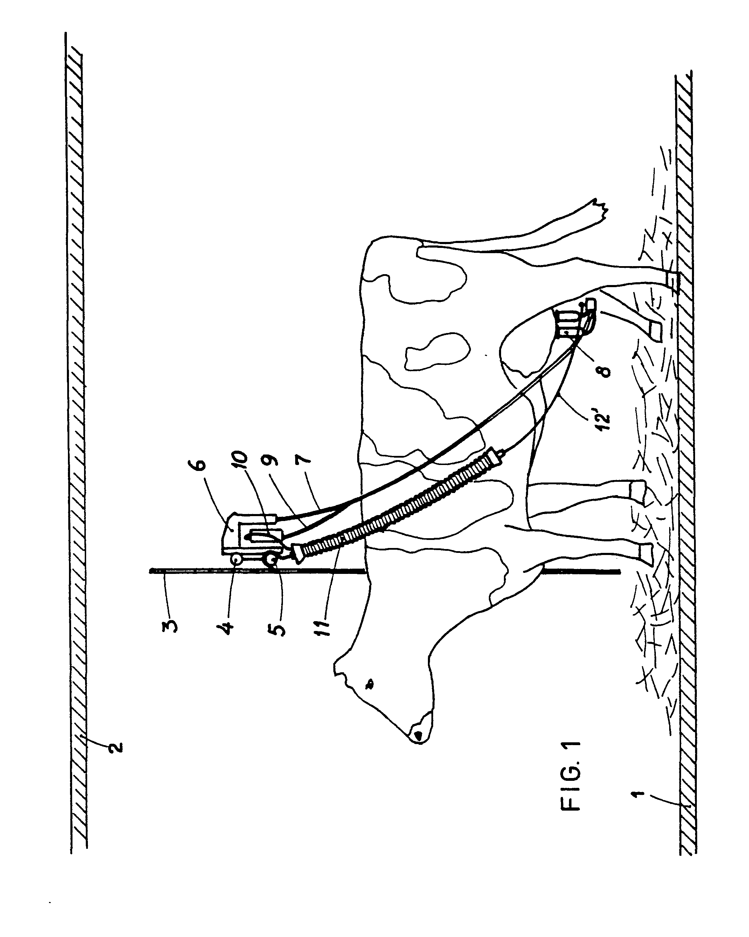

Referring to fig. 1 in a stable, e.g. a cow-shed, between the floor 1 and the roof 2 uprights 3 are provided. A milk conduit 4 and a vacuum conduit 5 are secured to said uprights, in substantially horizontal position. Between each two adjacent cow positions a handgrip 6, known per se, may be connected to said conduits, the handgrip 6 for example being placed by means of a snap connection against apertures provided in the conduits 4 and 5. Thereby the conduit 4 is entered into communication with a milk hose 7, one end of which is connected to the hand grip 6 and the other end to a milking cluster 8, and a vacuum hose 9 is entered into communication with the vacuum conduit 5 and with the milking cluster 8. The electrical connection is made by plugs (not shown).

A short hose 10 connects the upper end of the lifting element 11 with the vacuum valve (not shown).

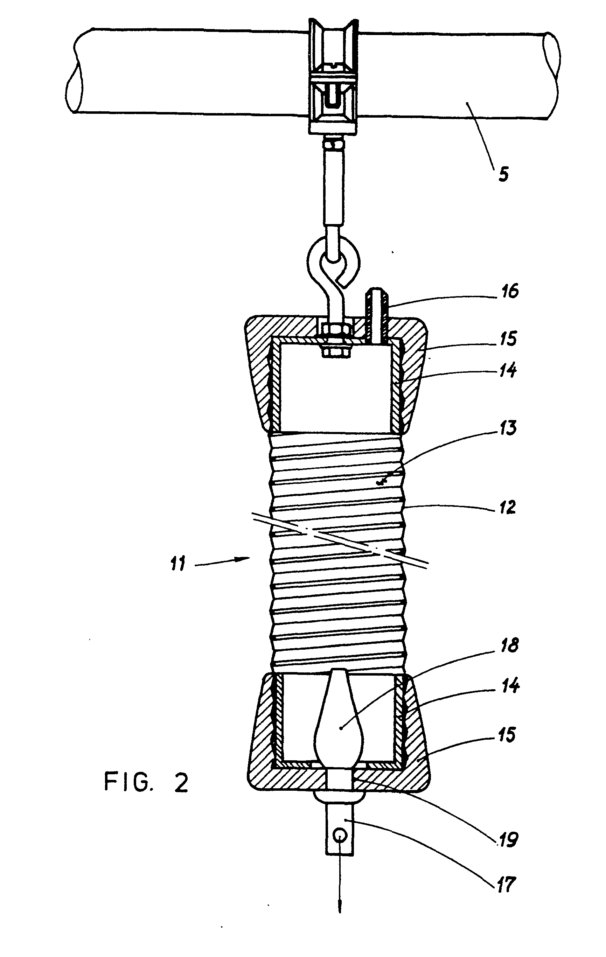

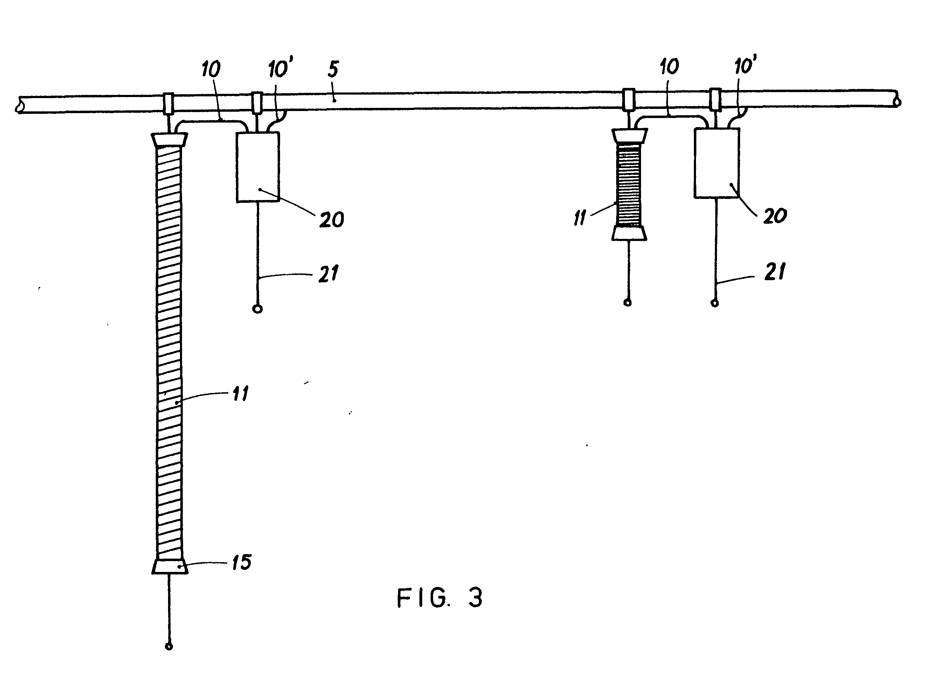

The lifting element 11 is shown in detail in fig. 2 and comprises in the embodiment shown an elongated element 12 in the shape of a bellows. This bellows-shaped element may be a tube or hose which may be woven from synthetic material threads and is covered with or impregnated by a rubber or other elastomeric material. This tube receives interiorly a thin metallic coil spring 13, having a diameter such that it engages the tube interiorly. The open tube ends are clamped around a cup shaped end piece 14 by means of an elastic end cap 15 of rubber or plastic. Thereby the bellows ends are sealed. The tube is thin-walled so that it can easily be compressed in the longitudinal direction to a condition in which the spring turns are in mutual engagement (see fig. 3 to the right).

A fitting 16 is provided in the upper end of the bellows and adapted to be connected to the vacuum hose 10. An eye-piece 17 is provided at the lower end of the bellows, the other end of the lifting cord 12, connected to the milking cluster 8, being connectable to this eye-piece. In the embodiment shown the eye-piece 17 is part of a pear-shaped elastic plug 18, which is inserted through a central bottom aperture 19 of the lower end cap 15.

Figure 3 shows the electronic control assembly provided in a separate housing 20 which is connected to the vacuum conduit 5. However, this housing may also be provided on top of the upper end cap 15 of the lifting apparatus 11. A vacuum hose 10 extends from the fitting 16 of the removal apparatus to the housing 20 and is connected there within to the vacuum valve (not shown), another connecting sprout of which is connected to the vacuum conduit 5 through a short hose 10'. If the starting switch (not shown) in the assembly 20 is actuated by the cord 21, the milking process is put in operation, wherein the vacuum valve closes the communication between the bellows 11 and the vacuum conduit 5 and simultaneously enters the interior of the bellows 11 into communication with the ambient air (this ambient air communication may also be established by pulling a cord — not shown — connected to the lower end of the element 11, whereby, as said above, an air valve provided at that position is opened). Due to the air supply within the bellows 11 this assumes its largest length according to fig. 3 whereby the milking cluster 8 may be connected to the cow's udder.

If a so-called milk flow indicator issues a signal that the milk quantity contained in the cow has been exhausted, the milking process is terminated and the vacuum valve is operated such that it communicates through the conduits 10 and 10' the vacuum of the conduit 5 with the bellows 11, whereby this bellows retracts to thoe position indicated in figure 3 to the right.

It will be clear that the lifting element need not be a cylindrical bellows. It may also have, instead of the coil spring, metallic or plastic rings, e.g. such rings which concentrically fit one within the other when the bellows retracts, which rings are contained within a thin elastic outer covering, corresponding to that discussed above, said coveriong being in the case of the concentric rings somewhat cone-shaped. It is also possible to comprise the lifting element of tube portions which telescopically mutually connected, however, in that case said tube portions have to be completely mutually sealed.

It is further remarked that also with knoiwn removal apparatus the connection between the lifting cylinder and the lifting cord may give way without damage if the cow puts its leg on this cord, e.g. in that the cord and the milking cluster are mutually connected through a resilient clamp. Contrary to the embodiment with the plug 18 according to fig. 2 in that case the vacuum still causes lifting of the lifting cord.

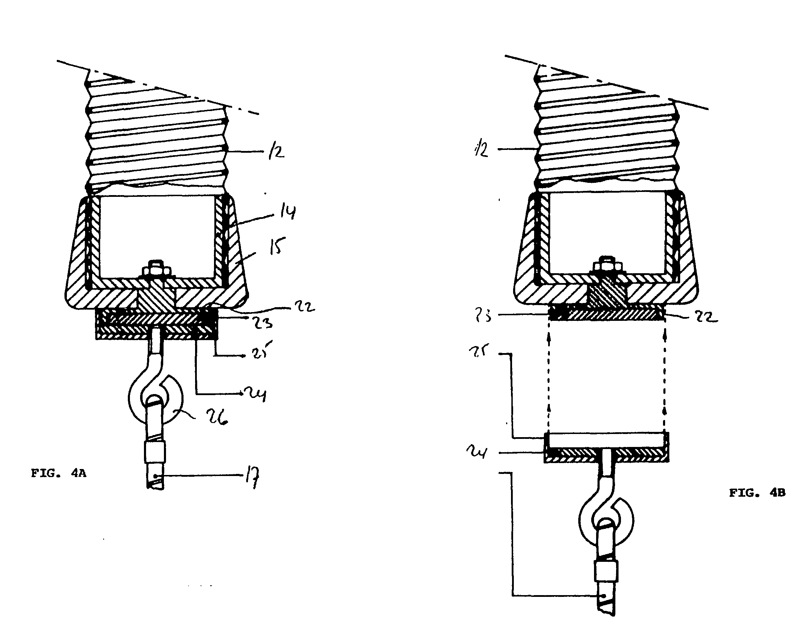

Fig. 4 shows the above mentioned magnetic step-on-projection. A magnet housing 22 is secured in the lower end cap 15 of the hose 12 by means of an end pin on that housing, provided with screw thread, and a nut. A plate shaped permanent magnet 23 is received in said housing. the edge of the housing 22 is contained in the plane of the exposed lower side of the magnetic plate 23. In normal circumstances a soft iron plate 24 engages the magnet, said soft iron plate being secured in a protection cap 25. Said cap prevents damage to the plate when it falls on the floor, as well as contact of the plate with dirt. By this feature and the flush edge of the magnet housing the adhesion force of the magnet is not reduced by intervening dirt or burrs. Said maximum adhesion force is adjusted to a value with which no damaging of the hose occurs.

Fig. 4a shows the position in which the lifting cord is connected with the hose and fig. 4b shows the condition in which the lifting cord has been pulled free from the hose.

As said, the vacuum valve may be a three-way valve, but also a two-way valve if a small air valve (not shown) has been provided to the lower end of the lifting element, which is actuable by a separate cord. This construction is cheaper and, moreover, the lifting bellows may then be moved to its extended condition by pulling this cord, whereby the bellows may be drawn in the direction towards the cow.

It will be clear that the novel removal apparatus may also be used in other stables than the mentioned cow-sheds.

## Claims

1. An apparatus for applying and removing a milking cluster (8) to and from a cow respectively, comprising a vertically movable lifting element (11), to which the milking cluster is connected by means of a lifting cord (12'), said apparatus being connected with a valve which is connected by a vacuum hose (10') to the vacuum conduit (5) of a milking machine and which is included in an electronic control circuit (20), which valve is adapted to be switched by said circuit into a position in which it brings the lifting element (11) under the influence of the vacuum, whereby the milking cluster (8) is lifted into a rest position above the ground, while simultaneously being released from the cow's udder, characterized in that the lifting element (11) is an air tight elongated flexible hose-shaped bellows, manufactured from a resilient material and internally engaged by a rigid, e.g. metallic ring between each two successive ondulations of the bellows, said bellows being as a whole longitudinally contractable and expansible respectively as a result of air pressure prevailing therein and having the lifting cord attached at its lower end.

2. Apparatus according to claim 1, characterized in that the rings are constituted by the turns of a coil tension spring (13) continuing along the length of the bellows.

3. Apparatus according to claim 1, characterized in that the vacuum valve is a two-way valve and in that a manually operable air supply valve is provided at the lower end of the lifting element (11).

4. Apparatus according to claim 3, characterized in that the manually operable air supply valve is a resilient plug (18) which is retractably inserted into a central aperture (19) in the bottom of the lifting element (11) and to which the lifting cord (12') is connected.

5. Apparatus according to claim 1, characterized in that the lifting cord (12') is connected with the lifting element (11) by means of a soft iron plate (24) and a permanent magnetic plate (23), one of said plates being connected to the lifting cord (12') and the other being secured to the lower end of the lifting element, or by means of two oppositely polarised permanent magnetic plates respectively, a protection cup (25) surrounding the plate that is connected to the lifting cord (12').

## Patentansprüche

1. Gerät zur Anlage bzw. Abnahme eines Melksatzes (8) bei einer Kuh, bestehend aus einem senkrecht bewegbaren Hebeelement (11) mit welchem der Melksatz mittels einer Hebeschnur (12') verbunden ist, welches Gerät mit einem Ventil verbunden ist, welches mittels einer Vacuumschlange (10') mit der Vacuumleitung (15) einer Melkmaschine verbunden ist, und welches Ventil in einem elektronischem Steuerkreis (20) aufgenommen ist, welches Ventil von diesem Kreis in eine Lage schaltbar ist, in welcher das Ventil das Hebelement (11) unter den Einfluss des Vacuums bringt, so dass der Melksatz (8) zu einer Ruhelage oberhalb des Bodens gehoben wird während er gleichzeitig vom Euter der Kuh gelöst wird, dadurch gekennzeichnet, dass das Hebeelement (11) ein luftdichter, länglicher, biegsamer, schlauchförmiger Balg ist, gefertigt aus einem elastischen Werkstoff und im Innern in Berührung mit einem steifen, z.B. Metallring zwischen jeden zwei aufeinanderfolgenden Balgwellen, welcher Balg insgesamt in Längsrichtung einziehbar bzw. ausdehnbar ist im Zusammenhang mit einem darin herrschenden Luftdruck, während die Hebeschut am unteren Ende des Balgs befestigt ist.

2. Gerät nach Anspruch 1, dadurch gekennzeichnet, dass die Ringe von den Windungen einer Zugschraubenfeder (13) gebildet sind, welche Feder sich über die Länge des Balgs erstreckt.

3. Gerät nach Anspruch 1, dadurch gekennzeichnet dass das Vacuumventil ein Zweiwegventil ist und dass ein von Hand bedienbahres Luftzufuhrventil am unteren Ende des Hebellementes (11) vorgesehen ist.

4. Gerät nach Anspruch 3, dadurch gekennzeichnet dass das von Hand bedienbare Luftzufuhrventil ein elastischer Stopfen (18) ist, welcher ausziehbar in einer zentralen Öffnung (19) im Boden des Hebeelements (11) eingesteckt ist und mit welchem die Hebeschnur (12') verbunden ist.

5. Gerät nach Anspruch 1, dadurch gekennzeichnet, dass die Hebeschnut (12') mit dem Hebeelement (11) verbunden ist mittels einer Platte (24) aus Weicheisen und einer permanentmagnetischen Platte (23), von welchen Platten eine mit der Hebeschnur (12') verbunden ist und die andere am unteren Ende des Hebeelements befestigt ist, oder bzw. mittels zweier entgegengesetzt polarisierter permanentmagnetischen Platten, während eine Schutzkappe (25) die mit der Hebeschnur (12') verbundene Platte umgibt.

## Revendications

1. Un appareil pour apporter respectivement enlever un jeu de cuvettes d'une trayeuse à une vache, comprenant un élément levant déplaçable verticalement, auquel le jeu de cuvettes est relié au moyen d'un corde levant, ledit appareil étant relié à une soupape étant réliés lui même par un tuyau vacuum à la conduite vacuum d'une trayeuse, ladite soupape étant enserrée dans un circuit électronique de contrôle et étant adaptée à être commutée par ledit circuit dans une position dans laquelle la soupape met l'élément levant à l'influence du vacuum de sorte que le jede de cuvettes est léve à une position de repos au-dessus du sol, tandis que simultanément la soupape est dégagée de la mamelle de la vache, caractérisé en ce que l'élément levant (11) est un soufflet impénétrable à l'air, oblong, flexible, en forme d'un manche, fabriqué d'un matériau élastique et engagé intérieurement par un anneau rigide, par example métallique, entre chaque deux ondulations successives du manche, ledit manche étant contractable et expansible respectivement longitudinalement en entier par suite de la pression d'air existant à l'intérieur, la corde levant étant reliée à l'extrémité inférieure du manche.

2. Appareil selon la revendication 1, caractérisé en ce que les anneaux se constituent par les enroulements d'un ressort de tension en hélice (13) se continuant sur la longeur du manche.

3. Appareil selon la revendication 1, caractérisé en ce que la soupape vacuum est une soupape à deux voies et en ce qu'une soupape d'admission d'air, étant actuable à main, est prévue dans l'extrémité inférieure de l'élément levant (11).

4. Appareil selon la revendication 3, caractérisé en ce que la soupape d'admission d'air, étant actuable manuellement, est un tampon élastique (18), étant inserré amovible dans une ouverture (19) centrale dans le fond de l'élément levant (11), la corde levant (12') étant réliée audit tampon.

5. Appareil selon la revendication 1, caractérisé en ce que la corde levant (12') est reliée à l'élément levant (11) au moyen d'une plaque en fer doux (24) et d'une plaque (23) magnétique permanente, une desdites plaques étant réliées à la corde levant (12') et l'autre étant fixée à l'extrémité inférieure de l'élément levant ou respectivement au moyen de deux plaques magnétiques permanentes, qui sont polarisées de façon opposée, une chape (25) de protection entourant la plaque reliée à la corde levant (12').

FIG. 1

FIG. 2

FIG. 3

EP 0 217 472 B1

FIG. 4B

FIG. 4A